# EUROPEAN PATENT APPLICATION

(11) **EP 3 418 725 A1**
(43) Date of publication of application: **26.12.2018**
(21) Application number: 17001558.0
(22) Date of filing: 18.09.2017
(51) Int. Cl.: G01N 21/88, H04M 1/24

(54) **DEVICE FOR OPTICAL DETECTION OF DEFECTS OF MIRROR SURFACES OF FLAT OBJECTS, IN PARTICULAR THE DISPLAYS OF MOBILE PHONES AND/OR SMARTPHONES**

(30) Priority: 20.06.2017 PL 42196217
(71) Applicant: Digital Care Sp. z o.o., 02-146 Warszawa (PL)
(72) Inventor: Wistuba, Aleksander, 81-813 Sopot (PL)
(74) Representative: Gizinska-Schohe, Malgorzata

(57) **Abstract**

The invention describes a device for optical detection of defects of mirror surfaces of flat objects, in particular displays of mobile phones and/or smartphones, characterised in that in the bottom part of a housing (1) there is an opening (2) for, placed in a diffuser (10), the examined object (25) connected to the device by cables (15), whereas in an opening (3) in the top part of the housing (1) a display (3a) is placed, below which a power supply (5), a detector (6), a power stage (7) and a driver (8) are mounted, whereas illuminating means (20, 21, 22, 23, 24, 25) that illuminate the diffuser (10) are distributed at sides of the diffuser.

## Description

The object of the invention is a device for optical detection of defects of mirror surfaces of flat objects, in particular displays of mobile phones and/or smartphones, such as material losses, cuts, cracks, scratches and stains.

Chinese patent application No. CN2014100937086 published in July 2014 describes a method for the detection of defects in the glass surface of the display of a mobile phone, based on the principal component analysis method (PCA). The defects are identified by using the PCA algorithm and the obtained results show the type of the defect. The method significantly improves the efficiency of detection and handles defects better than the manual detection method, which is time-consuming, tedious and depends largely on the experience of the person detecting the defect.

The essence of the invention is a device for optical detection of the defects of the mirror surfaces of flat objects, in particular the displays of mobile phones and/or smartphones.

The device according to the invention has in the bottom part of the housing an opening configured to place the examined object, connected to the device by cables, in a diffuser. In an opening, in the top part of the housing, a display is placed, under which a power supply, a detector, a power stage and a driver are mounted. The light sources, preferably in the form of LEDs, illuminating the diffuser are placed at the sides of the diffuser. The LEDs are mounted preferably on supports, at least one LED panel being mounted on each support. The power supply, the detector, the power stage and the driver are mounted on the plate, below the display. The detector is preferably a camera.

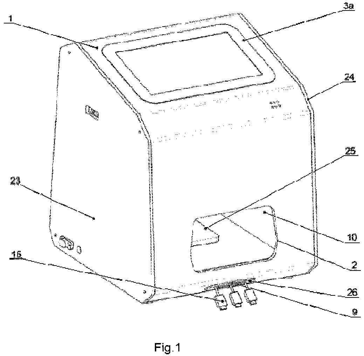

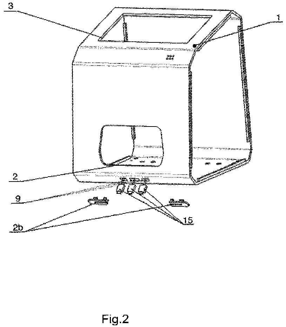

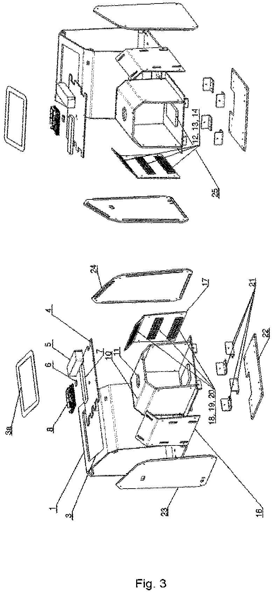

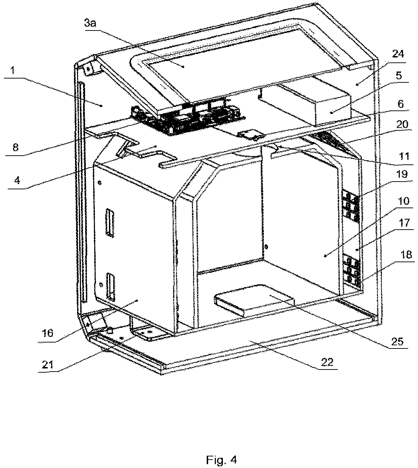

The object of the invention is presented in an embodiment in the drawing, which in fig. 1 presents the housing of the device in a perspective front view, fig. 2 - the device in a perspective front view with visible cables, fig. 3 - the disassembled device with visible internal components, fig. 4 - a vertical cross-section of the device in a perspective view.

The housing **1** of the scanning device is made of bent acrylic glass. In its bottom part there is an opening **2** for a mobile phone **25** placed in the diffuser **10.** In the top part of the housing, in the opening **3** there is a display **3a** placed at an angle for better visibility. Under the display **3a,** inside the housing **1** there is an upper plate **4,** on which a power supply **5,** an image detector in the form of a camera 6, a power stage **7** and a driver **8** are located. Cables with retractors **15** for connecting the phone are in the front part in special openings **9** and they are protected against falling out with a sealing plug **16** consisting of two parts. The cables **15** for connecting the phone are placed below the opening **2.** Only the tips of the cables **15** protrude outside the housing. Inside the housing **1,** in its bottom part there is a diffuser **10** with an opening **11** providing a field of view for the camera 6 placed above. The supports **16** and **17** of the right **12, 13, 14** and left **18, 19, 20** LED panels are mounted on the diffuser **10** on the left and right sides. The diffuser **10** is mounted by supports **21** to the bottom plate **22.** The housing is closed by the left flank **24** and the right flank **23.**

In order to activate the verification process for the phone display, the phone is connected to the device by means of one of the cables **15.** In order to plug the cables **15** into the examined object **25,** the tip of one of the cables **15** should be pulled, followed by placing the phone in the device and abiding by the instructions displayed by the controlling application.

Once the user initiates the scanning process, the device according to the invention takes a planned sequence of photographs of the examined object **25** with different combinations of the illumination of six LED panels. Controlling the light and taking the photographs proceeds automatically in accordance with the algorithm implemented in the application. The photographs taken are transmitted to a server, where they are subjected to an analysis of an algorithm detecting damages: cracks, fractures, scratches and others. After transmitting the result of the analysis from the server, the user is informed about the status of the display. The whole process of identifying the damage is automatic, not requiring the user's interference.

The device according to the invention enables automatic inspection of the quality of the mirror surface of flat objects, in particular the displays of mobile phones, in order to detect surface defects. A person who performs the inspection visually is subject to heavy eyestrain, and the results of their work are not fully objective, repetitive and documented. The modular construction of the housing enables uncomplicated access to electronic subsystems. Such an arrangement enables simple modifications and servicing of the device.

## Claims

1. A device for optical detection of defects of mirror surfaces of flat objects, in particular displays of mobile phones and/or smartphones, **characterised in that** in the bottom part of a housing **(1)** there is an opening **(2)** for, placed in a diffuser **(10),** the examined object **(25)** connected to the device by cables **(15),** whereas in an opening **(3),** in the top part of a housing **(1),** a display **(3a)** is placed, below which a power supply **(5),** a detector **(6),** a power stage (7) and a driver **(8)** are mounted, whereas illuminating means **(12, 13, 14, 18, 19, 20)** which illuminate the diffuser **(10)** are distributed at sides of the diffuser.

2. The device according to claim 1, **characterised in that** the detector (6) is in the form of a camera.

3. The device according to claim 1, **characterised in that** the illuminating means **(12, 13, 14, 18, 19, 20)** comprise LEDs as light sources.

4. The device according to claim 1 or 3, **characterised in that** the illuminating means **(12, 13, 14, 18, 19, 20)** are fixed on supports **(16)** and **(17).**

5. The device according to claim 1, **characterised in that** the power supply **(5),** the detector **(6),** the power stage **(7)** and the driver **(8)** are mounted on the top plate **(4)** below the display **(3a).**

6. The device according to claim 1, **characterised in that** at least one LED panel is mounted on each support **(26)** and **(27).**
